# EUROPEAN PATENT SPECIFICATION

(11) **EP 1 357 286 B1**
(45) Date of publication and mention of the grant of the patent: **07.12.2016**
(21) Application number: 03007143.5
(22) Date of filing: 28.03.2003
(51) Int. Cl.: F02N 11/08, F02D 41/04

(54) **Engine control unit**
Motorsteuereinheit
Unité de commande d'un moteur

(30) Priority: 23.04.2002 JP 2002120497
(43) Date of publication of application: 29.10.2003
(73) Proprietor: Honda Giken Kogyo Kabushiki Kaisha, Minato-ku, Tokyo (JP)
(72) Inventor: Ota, Atsuo, 4-1, Chuo 1-chome, Wako-shi, Saitama (JP); Karatsu, Hiroshi, 4-1, Chuo 1-chome, Wako-shi, Saitama (JP); Nagatsuyu, Toshiya, 4-1, Chuo 1-chome, Wako-shi, Saitama (JP)
(74) Representative: Weickmann & Weickmann PartmbB

(56) References cited:
- EP-A- 1 046 813
- EP-A- 1 227 230
- EP-A- 1 288 472
- WO-A-02/063163
- PATENT ABSTRACTS OF JAPAN vol. 2000, no. 22, 9 March 2001 (2001-03-09) & JP 2001 132489 A (DENSO CORP), 15 May 2001 (2001-05-15)

## Description

The present invention relates to an engine control unit that can shut down an engine while a vehicle is traveling for reducing fuel consumption, emission, and noise under predetermined conditions, and, more specifically, to an engine control unit suitable for enlarging the range of an economical operation while improving a feeling of travel for operators by shutting down the engine.

An economical operating method for reducing fuel consumption, emission, noise, and the like by shutting down an engine automatically when a vehicle is brought to a halt for waiting at stoplights at intersections or the like, or due to traffic jam is known. It is also known that, in the case of a hybrid car having an engine and an electric motor, it is driven only with a driving force of the motor with the engine shut down.

JP-A-10-131779 discloses an engine control unit for vehicles in which an engine is shut down during travel under such conditions that a throttle valve is completely closed and a vehicle is traveling at a velocity exceeding a predetermined value, and that a brake is applied with the throttle valve completely closed and the vehicle is traveling at a velocity lower than the predetermined value.

The vehicle in the related art in which the engine is automatically shut down during travel is premised on that the vehicle may continue to travel smoothly by inertia even when the engine is shut down. Therefore, the vehicle velocity that may be a condition to shut down the engine, that is, a condition to start economical operation, is set to a relatively high value, and thus the economical operation cannot be made at a low velocity in which the coasting travel is not smooth. However, in order to make the economical operation effective, it is desired that the economical operation is achieved even within a range of low velocities. Therefore, an engine control unit that enables an economical operation while maintaining a satisfactory traveling even in the range of low velocities is required.

An engine control unit according to the preamble of claim 1 is known from JP 2001-132489 A.

It is an object of the present invention to provide an engine control unit in which a coasting travel by shutting down the engine may be performed while maintaining a preferable traveling even within the range of low velocities and in which a catalyst or the like can be protected.

This object is achieved by an engine control unit having the features of claim 1.

The engine control unit is mounted on a vehicle having a catalyst or the like and a power transmission mechanism that can halt transmission of engine output to a driving wheel when the velocity of the engine is reduced. The engine control unit comprises a vehicle velocity detecting unit, an engine revolution speed detecting unit, a fully-closed-throttle-detecting unit, and an engine shut down unit for suspending the ignition of the engine after a time limit for shutting down the engine has elapsed, which is determined in accordance with the vehicle velocity at the moment when the throttle valve is closed.

The second characteristic of the present invention is that the aforementioned time limit for shutting down the engine is set for each of a plurality of velocity ranges, and the third characteristic is that the aforementioned time limit for shutting down the engine is set corresponding to the timing when the vehicle is brought to a halt and to the velocity range of stable traveling, and in that the time limit decreases with increase in vehicle velocity in the velocity range of stable traveling.

The fourth characteristic of the present invention is that the aforementioned power transmission mechanism includes a one-way clutch.

The fifth characteristic of the present invention is a control unit for driving a starter motor provided in the aforementioned vehicle and rotating a crankshaft to a position in which a load torque of normal rotation is small after the aforementioned engine is shut down.

According to the aforementioned characteristics, the fact that the braking operation is performed is detected by sensing that the throttle is fully closed, and the time period from the commencement of the braking operation to the timing to shut down the engine may be varied in accordance with the vehicle velocity. For example, according to the third characteristic, the engine is shut down in a short time since the throttle is fully closed in a high-velocity range in which a stable coasting travel is expected, while the engine is shut down after a certain time period since the throttle is fully closed in the low velocity range in which the degree of stability is not high.

The engine can be shut down reliably according to the invention, and transmission of the output of the engine can be disabled during deceleration in a simple structure according to the fourth characteristic.

Furthermore, according to the fifth characteristic, the time period after shutting down the engine till restarting the engine may be shortened by moving the crankshaft in advance to the position where it can be rotated in the normal direction easily.

According to the invention as set forth in Claims 1 to 5, since a time period from the commencement of braking operation to the timing for shutting down an engine, that is, the time limit for shutting down the engine may be varied in accordance with the vehicle velocity, the range which enables economical operation may be enlarged to the relatively low-velocity range while securing drivability. Especially, according to the invention as set forth in Claim 2, control may be simplified by setting the time limit for shutting down the engine for every vehicle velocity divided step-by-step.

According to the invention as set forth in Claim 3, since the time limit for shutting down the engine in the low-velocity range is set to a value longer than that in the high-velocity range, economical operation may be achieved when traveling at a high-velocity in which coasting travel may be expected as a matter of course, as well as in the traveling state in which coasting travel may be expected even when the throttle valve is fully closed, for example, on the gentle decline in the road and the like, except for the cases in which acceleration follows immediately after deceleration, for example, at an intersection and the like.

Furthermore, according to the invention as set forth in Claim 3, since the distance of travel corresponding to the time period from the commencement of braking operation until the timing when the engine is shut down (and until the coasting rotation is also terminated) may be set substantially constant, the engine is not shutdown more often than necessary as in the case of traveling on a curve on which the vehicle can travel just by decelerating but not by coming into a halt, or in the case of turning right or left in which the vehicle can restart again immediately, and the like. In other words, a driver generally starts deceleration depending on the distance to the position to turn right or left or the like. Therefore, the time period until the engine is shut down may be elongated for the low-velocity operation and shortened for the high-velocity operation so that the vehicle can pass the position to turn right or left or the like without shutting down the engine both at low-velocities and at high-velocities in the case where the braking operation is started at the same distance before the position to turn right or left and the like.

According to the invention as set forth in Claim 5, since the restart of the engine is facilitated, a high drivability may be secured even when the range of economical operation is enlarged to the low-velocity range.

Preferred embodiments of the invention will be explained with regard to the attached drawings.

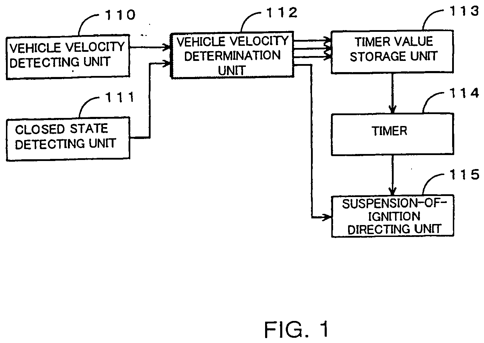

Fig. 1 is a block diagram showing a function of the principal portion for controlling engine shutdown.
Fig. 2 is a general side view of a scooter-type motorcycle to which the present invention is applied.
Fig. 3 is a cross sectional view taken along the line A-A in Fig. 2.
Fig. 4 is a partially enlarged view of Fig. 3.
Fig. 5 is a block diagram of an electrical system including an ACG starter.
Fig. 6 is a drawing showing a relation between the angular position of the crank and the get-over torque at the time of starting the engine.
Fig. 7 is a drawing showing a relation between the target time period of reverse rotation Trev of the ACG starter and the oil temperature.
Fig. 8 is a drawing showing a relation between the vehicle velocity and the time period required until the engine is shut down.
Fig. 9 is a timing chart showing the action of the vehicle.
Fig. 10 is a flowchart of engine shutdown control.
Fig. 11 is a flowchart of vehicle velocity determination control.
Fig. 12 is a flowchart of engine start control.
Fig. 13 is a flowchart of the reverse-rotation-at-starting control.
Fig. 14 is a block diagram illustrating a function of the reverse-rotation-at-shutdown control.

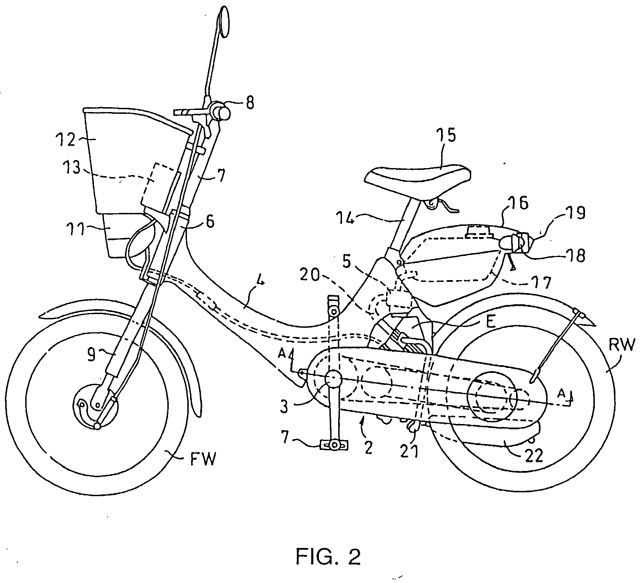

Referring now to the drawings, the present invention will be described in detail. Fig. 2 is a side view of a motorcycle with a pedal to which an engine control unit according to the present invention is applied. In the same figure, a power unit 2 is suspended from a vehicle body frame 4. The power unit 2 includes an engine E and a force-on-pedal drive unit mounted at the front portion thereof, and a rear wheel RW supported at the rear portion thereof. Furthermore, the power unit 2 includes a power transmission and a velocity reducer disposed between the engine E and the rear wheel RW for transmitting the output of the engine E to the rear wheel RW after changing and reducing the velocity thereof (that will be described in detail later). The pedal force driving unit is a drive system provided separately from an engine drive system since it drives the rear wheel RW by a manpower (a force on pedal), and is provided with a pedal shaft 3 and a pedal 7 as force-on-pedal input means.

A steering shaft 7 is rotatably supported in a head pipe 6 formed at the front portion of the vehicle body frame 4, and a handle 8 extending laterally is attached at the top of the steering shaft 7. A front fork 9 is connected to the lower portion of the steering shaft 7. A front wheel FW is supported at the lower end of the front fork 9. A headlight 11, a basket for baggage 12, and a battery 13 are provided in front of the steering shaft 7 and the head pipe 6.

A seat post 14 is mounted at the reward of the vehicle body frame 4, and a seat 15 is mounted on the seat post 14, which extends upward and slightly rearward. A storage case 16 is provided below the rear portion of the seat 15, and a fuel tank 17, an air cleaner (not shown), and the like are stored in the storage case 16. Furthermore, turn signal lights 18 and the rear indicator lamp 19 are mounted at the rear portion of the storage case 16.

A carburetor 5 is mounted above the engine E, and the fuel tank 17 and the air cleaner are connected to the carburetor 5. Fuel mixed with air in the carburetor 5 is supplied through an intake pipe 20 to the engine E. An exhaust pipe 21 is connected to the engine E, and exhaust air from the engine E is discharged through the exhaust pipe 21 and a muffler 22 rearward.

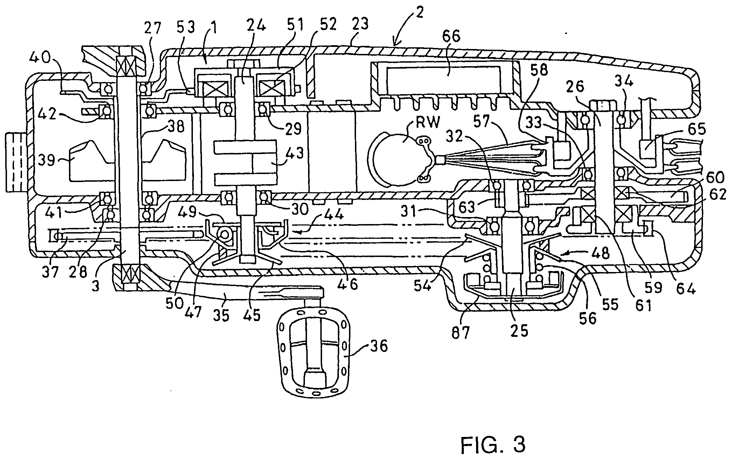

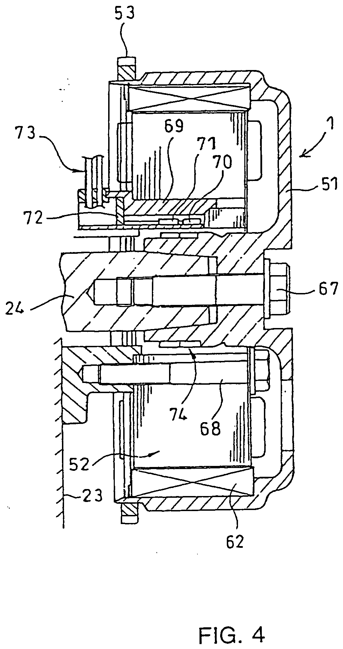

Fig. 3 is a cross sectional view taken along the line A-A in Fig. 2 and Fig. 4 is a partially enlarged view of Fig. 2. The power unit 2 includes the pedal shaft 3 supported by a unit case 23, a crankshaft 24 of the engine E, an intermediate shaft 25, and a rear axle 26. The pedal shaft 3 is supported by the unit case 23 via bearings 27 and 28, and the crankshaft 24 is supported by the unit case 23 via bearings 29 and 30. The intermediate shaft 25 and the rear axle 26 are supported by the unit case 23 via bearings 31 and 32 and bearings 33 and 34 respectively. A crank 35 is connected to both ends of the pedal shaft 3, and a pedal 36 is attached to the distal end of the crank 35. A drive sprocket 37 for transmitting a force-on-pedal is connected to the pedal shaft 3. In addition, a cooling fan 39 and a gear 40 for rotating the cooling fan are provided on the force-on-pedal crankshaft 3 via a sleeve 38. The sleeve 38 is supported by the unit case 23 via bearings 41 and 42.

A connecting rod 43 is connected to the crankshaft 24 via a crank pin, not shown. A belt drive pulley 44 of a belt-type continuous transmission is rotatably mounted at one end of the crankshaft 24. The belt drive pulley 44 includes a fixed pulley unit 45 and a movable pulley unit 46. The fixed pulley unit 45 is secured to the crankshaft 24, and the movable pulley unit 46 is spline-fitted to the crankshaft 24 so as to be capable of displacing in the axial direction. A V-belt 47 is put around the belt drive pulley 44, and the V-belt 47 is also put around a belt-driven pulley 48.

A cam plate 49 is secured to the crankshaft 24 adjacent to the movable pulley unit 46. The outside of the movable pulley unit 46, that is, the side which does not come into contact with the V-belt, has a tapered surface the portion near the outer periphery of which inclines toward the cam plate 49 side, and a dry weight 50 is stored in a space between the tapered surface and the movable pulley unit 46.

An outer rotor 51 of a starter & power generator (ACG starter) 1 including a starter motor and an AC generator assembled together is connected to the other end of the crankshaft 24. A stator 52 to be fixed to the unit case 23 is provided on the inner side of the outer rotor 51. A gear 53 is provided on the outer periphery of the outer rotor 51, and the gear 53 engages the aforementioned gear 40 to provide a driving force to the cooling fan 39. Detailed description of the ACG starter 1 will be provided later.

The driven pulley 48 provided on the intermediate shaft 25 also includes a fixed pulley unit 54 and a movable pulley unit 55 as in the case of the drive pulley 44. The fixed pulley unit 54 is connected to the intermediate shaft 25, and the movable pulley unit 55 is spline-fitted to the fixed pulley unit 54 so as to be capable of displacing in the direction of the axis of the intermediate shaft 25. The movable pulley unit 55 is urged by a spring 56 in the direction to reduce the distance with respect to the fixed pulley unit 54. A centrifugal clutch 87 for engaging the driven pulley 48 and the intermediate shaft 25 is provided at the end of the intermediate shaft 25.

A hub 58 for supporting the rear wheel RW via a spoke 57 is connected to the rear axle 26. A driven sprocket 59 is mounted to an end of the rear axle 26, and a reduction gear 60 is also mounted thereto on the inner side of the driven sprocket 59 via one-way clutches 61 and 62 respectively. The reduction gear 60 engages a pinion 63 connected to the intermediate shaft 25. The intermediate shaft 25 or the rear axle 26 is provided on the periphery thereof with a sensor (not shown) for detecting the number of revolutions of these shafts. This sensor is used as a sensor for detecting the vehicle velocity. The driven sprocket 59 is connected to the drive sprocket 37 via a chain 64. A brake 65 engages the inside of the hub 58.

A control unit 66 for the ACG starter 1 is stored in the unit case 23. Since the control unit 66 is provided with a rectifier element, it is attached to the portion of the case provided with a fin for cooling.

When the pedal 36 is worked and hence the pedal shaft 3 is rotated, the drive sprocket 37 rotates, and rotation of the drive sprocket 37 is transmitted to the driven sprocket 59 by the chain 64. Rotation of the driven sprocket 59 is transmitted to the rear axle 26 via the one-way clutch 61. When working on the pedal 36 is stopped, no force-on-pedal is provided to the rear axle 26. However, since the one-way clutch 61 allows rotation of the rear wheel RW in the direction of travel even when the driven sprocket 59 is stopped, the rear wheel RW may be rotated by inertia.

The engine E is started by the ACG starter 1. When a current is supplied from the aforementioned battery 13 through the control unit 66 to the stator 52 of the ACG starter 1, the outer rotor 51 rotates, and the engine E is started. When the engine E is started once, the ACG starter 1 serves as an electric generator. The gear 40 is rotated by rotation of the outer rotor 51 via the gear 53, whereby the cooling fan 39 is energized.

When the engine E rotates and the rotational velocity of the crankshaft 24 increases, the dry weight 50 moves in the radial direction by a centrifugal force. Accordingly, the movable pulley unit 46 is displaced by being pressed by the dry weight 50, and hence approaches the fixed pulley unit 45. As a consequence, the V-belt 47 moves toward the outer periphery of the pulley 44, and the winding diameter increases.

When the winding diameter of the V-belt 47 around the drive pulley 44 increases, the movable pulley unit 55 of the driven pulley 48 provided at the rear portion of the vehicle is displaced accordingly. In other words, the movable pulley unit 55 is displaced against the spring 56 so that the winding diameter of the V-belt 47 around the driven pulley 48 reduces. In this manner, the power of the engine E is adjusted automatically and transmitted to the intermediate shaft 25, and when the rotational velocity of the driven pulley 48 increases, the rotation thereof is transmitted to the intermediate shaft 25 by the centrifugal clutch 87. Rotation of the intermediate shaft 25 is reduced in velocity by the reduction gears 63 and 60 and transmitted to the rear axle 26. When the engine E is shut down, no power of engine E is provided to the rear axle 26. However, since the one-way clutch 62 allows rotation of the rear wheel RW in the direction of travel even when the gear 60 stopped rotating, the rear wheel RW may be rotated by inertia.

In Fig. 4, in the ACG starter 1, the outer rotor 51 is fixed to the tapered portion at the tip of the crankshaft 24 by a bolt 67. The stator 52 disposed on the inner peripheral side of the outer rotor 51 is fixed to a boss of the unit case 23 by a bolt 68. A sensor case 69 is fitted into the inner periphery of the stator 52. A rotor angle sensor (magnetic pole sensor) 70 and the pulsar sensor (ignition pulsar) 71 are provided in the sensor case 69 along the outer periphery of the boss of the outer rotor 51 at regular intervals.

The rotor angle sensor 70 is for performing current-carrying control for the stator coil of the ACG starter 1. The ignition pulsar 71 is for controlling ignition of the engine E, and is provided only one. The rotor angle sensor 70 and the ignition pulsar 71 may be constructed of a Hall IC or the magnetoresistive (MR) elements and the like.

The leads of the rotor angle sensor 70 and the ignition pulsar 71 are connected to a substrate 72, and a wire harness 73 is also connected to the substrate 72. A magnet ring 74, which is magnetized into two-stages so as to exert magnetic effect on the rotor angle sensor 70 and the ignition pulsar 71 respectively, is fitted into the outer periphery of the boss of the outer rotor 51.

One of the magnetized bands on the magnet ring 74 corresponding to the rotor angle sensor 70 is formed with N-poles and S-poles arranged alternately at intervals of 30° in the circumferential direction corresponding to the magnetic poles of the stator 52, and the other magnetized band of the magnet ring 74 corresponding to the ignition pulsar 71 is formed at one position with a magnetized portion extending in the range of 15° to 40° in the circumferential direction.

The ACG starter 1 serves as a starter motor (synchronous motor) when starting the engine, and starts the engine E by rotating the crankshaft 24 by a current supplied from the buttery. After the engine has started, it serves as a synchronous power generator and charges the buttery by a generated current and simultaneously supplies currents to each electrical component.

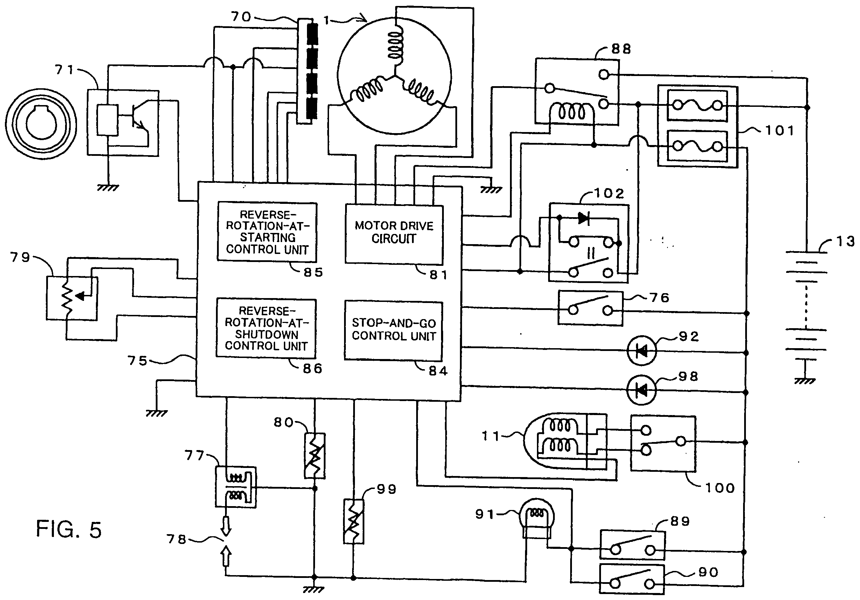

Fig. 5 is a block diagram of an electrical system including the ACG starter 1. The ECU 75 provided in the control unit 66 includes a motor drive circuit 81. The motor drive circuit 81 is constructed, for example, of a MOS-FET, and performs full-wave rectification on three-phase alternating current generated by the ACG starter 1, and then supplies a current from the buttery 13 to the ACG starter 1 when making the ACG starter 1 function as a motor.

The rotor angle sensor 70, the ignition pulsar 71, a throttle sensor 79, and an oil temperature sensor 80 are connected to the ECU 75, and detected signals from each sensor is supplied to the ECU 75. An ignition coil 77 is connected to the ECU 75, and an ignition plug 78 is connected to the secondary side of the ignition coil 77.

Furthermore, a starter switch 76, a starter relay 88, stop switches 89 and 90, a stop light 91, a stand-by indicator 92, a battery indicator 98, an automatic choke 99 and a headlight 11 are connected to the ECU 75. A dimmer switch 100 is provided on the headlight 11.

Current is supplied from the battery 13 to each of the aforementioned parts via a main fuse 101 and a main switch 102. While the battery 13 is directly connected to the ECU 75 via the starter relay 88, it has a circuit connected to the ECU 75 only via the main fuse 101, but not via the main switch 102.

The ECU 75 is provided with a stop-and-go control unit 84, a reverse rotation-at-starting control unit 85 and a reverse-rotation-at-shutdown control unit 86. The stop-and-go control unit 84 controls idling, automatic shutdown, and restarting of the engine. The reverse-rotation-at-starting control unit 85 rotates the crankshaft 24 in the reverse direction to a predetermined position when the engine is started by the starter switch 76, and then rotates the same in the normal direction. The reverse-rotation-at-shutdown control unit 86 rotates the crankshaft 24 in the reverse direction to a predetermined position when the engine is automatically shut down. Such reverse rotation control units 85 and 86 are provided for improving starting capability of the engine for the next time. To rotate the crankshaft 24 in the reverse direction for the subsequent starting in such a manner is referred to as "swing back".

The stop-and-go control unit 84 shutdowns the engine automatically when the vehicle is brought to a halt, or when predetermined conditions for shutting down are satisfied during travel, and drives the ACG starter 1 automatically and restarts the engine when the restarting conditions such that the throttle valve is opened are satisfied after the automatic shutdown of the engine. The stop-and-go control controls idling of the engine in either one of the "starting mode" and the "stop-and-go mode". In the starting mode, idling is allowed only for a certain period after starting the engine for the first time for the purpose of warming up operation and the like at the time of starting the engine.

The swing back operation will now be described. The reverse-rotation-at-starting control unit 85 of the ECU 75 rotates the crankshaft 24 in the reverse direction once to the position where the load torque in normal rotation is low when starting the engine by the starter switch 76, and subsequently, drives the ACG starter 1 further in the normal direction to start the engine E. However, only by rotating the ACG starter 1 in the reverse direction for a predetermined time period, the normal rotation cannot be started from the a desired angular position of the crank due to difference of rotational friction of the engine E. Therefore, the temperature of engine oil (oil temperature) is detected when rotating the engine E in the reverse direction, and then the time period for reverse rotation of the ACG starter 1 is determined in accordance with the oil temperature. In other words, the time period for reverse rotation decreases with the height in oil temperature. Accordingly, when restarting the engine after a temporary shut down, the engine can start immediately while avoiding the effects of the load torque.

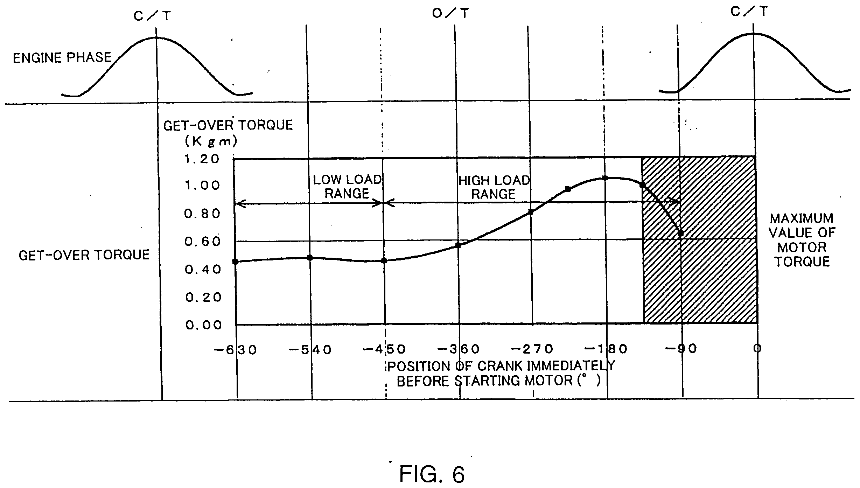

Fig. 6 is a drawing showing a relation between the angular position of the crank when starting the engine and the torque required when getting over the get-over torque, that is, the top dead center. The get-over torque is small when the angular position of the crank is in the range between 450° and 630° before the top dead center on the compression stroke C/T, that is, in the range between 90° and 270° before the top dead center on the exhaust stroke O/T (range of low load). On the other hand, the get-over torque is high in the range between 90° and 450° before the top dead center on the compression stroke C/T (range of high-load), and especially, the get-over torque is the maximum at 180° before the top dead center on the compression stroke C/T. In other words, the get-over torque is larger before the substantially top dead center on the compression stroke C/T and smaller before the top dead center on the exhaust stroke O/T.

Therefore, in the present embodiment, the energizing time is determined so that the crankshaft 24 stops within the aforementioned range of low load when the ACG starter 1 is energized to rotate the crankshaft 24 in the reverse direction. In this manner, by rotating the crankshaft 24 in the reverse direction to the range of low load and then energizing the ACG starter 1 from that position in the normal direction, the crank can get over the top dead center on the compression stroke C/T with a small get-over torque.

When the engine E is shut down, the crank does not stop in the vicinity of the top dead center on the compression stroke C/T (the range about 140° before the top dead center on the compression stroke C/T when viewed in the direction of the reverse rotation) in many cases (the shadowed range). Therefore, the ACG starter 1 is energized in the direction of reverse rotation for the time period required for changing the angular position of the crank from about 140° before the top dead center on the compression stroke C/T to the front end of the aforementioned range of low load, that is, to the position 90° before the top dead center on the exhaust stroke O/T.

Especially, when allowing the crankshaft 24 to rotate in the reverse direction for more than the time period required for the crankshaft 24 to rotate between the top dead center on the compression stroke C/T and the top dead center on the exhaust stroke O/T, that is, the time period in which the angular position of the crank changes by 360°, the angular position of the crank after being rotated in the reverse direction by 360° or more is included in the range before the top dead center on the exhaust stroke O/T, that is, in the range of low load, wherever the crankshaft 24 may be positioned when reverse rotation is started.

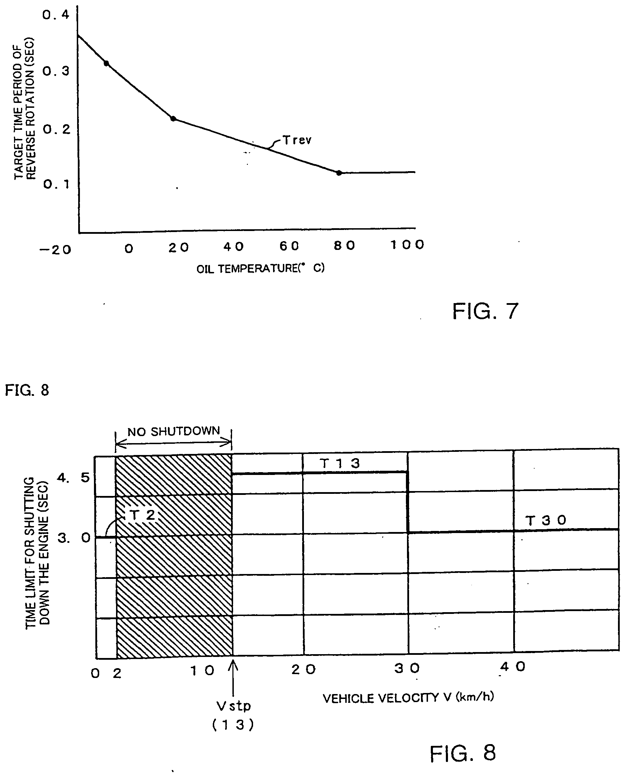

Fig. 7 is a drawing showing a relation between the target time period of reverse rotation Trev of the ACG starter 1 and the oil temperature. In the present embodiment, the target time period of reverse rotation Trev decreases with the height of the oil temperature, that is, with decrease in rotational friction.

Referring to the drawings, an example of action of the vehicle controlled by the stop-and-go control unit will be described. Fig. 8 is a drawing showing a relation between the vehicle velocity and the time period required until the engine is shut down. In this embodiment, the ignition is suspended after a predetermined time period (the time limit for shutting down the engine) T has elapsed after the opening of the throttle fed from the throttle sensor 79 is reduced to the value below the predetermined value. This time period T is determined in conjunction with the vehicle velocity V.

In Fig. 8, in the low velocity range in which travel is unstable (when the vehicle velocity V is between 2 and 13 km/h), the ignition is not turned off. On the other hand, when the vehicle velocity V is a reference vehicle velocity (the lowest vehicle velocity which enables stable travel even when the engine is shut down: 13 km/h here) Vstp or higher, the ignition is suspended after the time period T has elapsed since the throttle valve is closed. The time period T is set in two stages in accordance with the vehicle velocity V. The time period T13 when the vehicle velocity V is 13 to 30 km/h and the time period T30 when the vehicle velocity V is more than 30 km/h are different. For example, it is assumed that the time period T13 is 4.5 seconds, and the time period T 30 is 3.0 seconds. The time period T may not be the value varying step-by-step in accordance with the vehicle velocity V, but may be the value that varies (decreases) continuously in accordance with the vehicle velocity V. In other words, the time period T is set to decrease with increase in vehicle velocity V and to increase with decrease in vehicle velocity V. The time period T2 during which the vehicle is substantially in the state of being halted (2 km/h or below in vehicle velocity V in this case) is assumed to be 3.0 seconds.

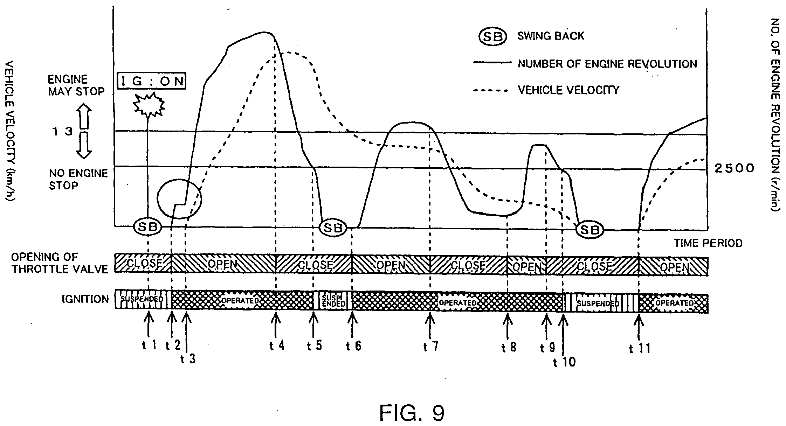

Fig. 9 is a timing chart showing the action of the vehicle. In the same figure, when the starter switch 76 is turned on at the timing t1, the ignition coil 77 is energized, and the ignition plug 78 ignite. Prior to ignition, the crankshaft 24 is swung back by the reverse-rotation-at-starting control unit 85. When ignited and the throttle valve is opened at the timing t2, the number of engine revolution Ne increases in accordance with the opening of the throttle valve. After the initial idling period, the clutch 87 engages at the timing t3, and the vehicle starts moving and the vehicle velocity V increases gradually.

When the operation to close the throttle valve (deceleration operation) is made at the timing t4, the throttle sensor 79 outputs a value corresponding to the closed state of the throttle. At this timing, whether or not the vehicle velocity V exceeds the reference vehicle velocity Vstp for shutting down the engine is determined. In this example, since the vehicle velocity V is at least the reference vehicle velocity Vstp, the ignition is suspended and hence the engine is shut down. In this case, the ignition is suspended when the time limit for shutting down the engine T has elapsed after the determination of the vehicle velocity V is made. It is for securing the time period to achieve a stable coasting since the throttle valve is closed.

When the number of engine revolution Ne is not decreased to the value below a predetermined value (for example, 2500 rpm) at the timing when the time period T has elapsed, it is desirable to wait with the suspension of the ignition until the number of engine revolution Ne is decreased to the predetermined number of engine revolution. Because it is preferable in view of protection of catalyst or the like to wait with the suspension of the ignition until the number of engine revolution is decreased to a predetermined number of engine revolution. In the example shown in Fig. 9, the ignition is therefore suspended when the number of the engine revolution is reduced to 2500 rpm, that is, at the timing t5. After the ignition is suspended, the swing back operation is performed by the reverse-rotation-at-shutdown control unit 86 in preparation for restarting. Furthermore, according to the present invention, a shutdown of the engine E is to be understood as a suspension of the ignition of the engine E.

When the throttle valve is opened at the timing t6, the engine is immediately ignited in response thereto, the number
of engine revolution Ne increases again in accordance with the opening of the throttle θTH with increase in opening of the throttle θTH. When the throttle valve is closed at the timing t7, the vehicle velocity V is compared with the reference vehicle velocity Vstp again. However, at this moment, since the vehicle velocity V is below the reference vehicle velocity Vstp, the ignition is not suspended.

At the timing t8, the throttle valve is opened and the number of engine revolution Ne increases. The throttle valve is closed again at the timing t9, and the vehicle velocity V is compared with the reference vehicle velocity Vstp again. However, at this moment, since the vehicle velocity V is below the reference vehicle velocity (13 km/h), the ignition is not suspended.

As soon as the vehicle speed is below 2 km/h, the time period T2 is set depending on the vehicle velocity V. After lapse of the time period T2 since the throttle valve has been closed, at the timing t10, as the vehicle velocity V is below the range of unstable travel (2 km/h or below) at which the engine is not shut down, and as the number of the engine revolution is reduced to 2500 rpm, the ignition is suspended. After the ignition is suspended, the swing back is performed by the reverse-rotation-at-shutdown control unit 86 in preparation for restarting.

When the ignition is turned on at the timing t11 and the throttle valve is opened, the number of engine revolution increases immediately without waiting for the idling period and the vehicle starts moving, and thus the vehicle velocity
V increases.

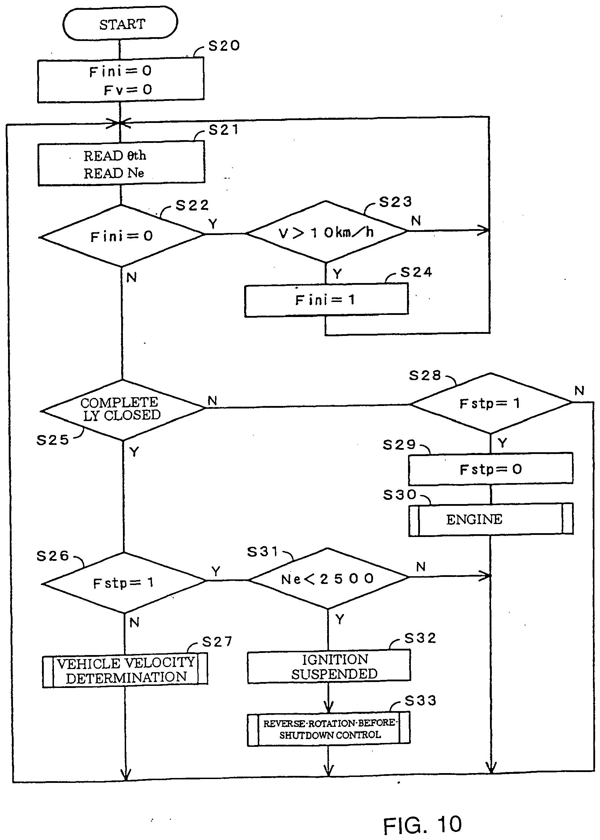

Fig. 10 is a block diagram showing a function of the principal portion for controlling engine shutdown. A vehicle velocity detecting unit 110 detects the vehicle velocity V based on the output of the vehicle velocity sensor. A closed state detecting unit 111 detects whether or not the throttle valve has completely closed based on the output of the throttle sensor 79. A vehicle velocity determination unit 112 determines, based on the vehicle velocity V and the closed state detecting signals, whether the vehicle velocity V is the first vehicle velocity that substantially corresponds to a state in which the vehicle is halted, the second vehicle velocity that corresponds to the low velocity range in which travel is unstable, the third vehicle velocity that corresponds to the medium velocity in which travel is stable, or the fourth vehicle velocity that corresponds to the high velocity range. A timer value storage unit 113 stores time periods T corresponding to the respective vehicle velocities as timer values. An example of the time periods T is shown in Fig. 8. When a timer 114 is set for time period T, and the time period T that the timer 114 is set for has elapsed, a suspension-of-ignition directing unit 115 is energized and hence the suspension-of-ignition directing unit 115 outputs an instruction to suspend ignition. Since the engine is not shut down at the aforementioned second
vehicle velocity, when it is determined that the vehicle velocity is the second vehicle velocity, the suspension-of-ignition directing unit 115 is not energized.

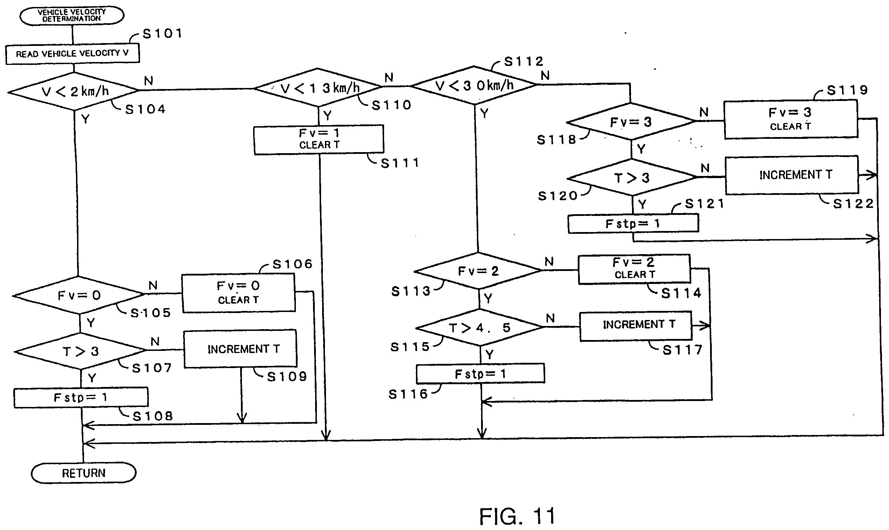

Referring subsequently to flowcharts in Fig. 10 and Fig. 11, control of engine shutdown will be described in detail. In Fig. 10, the initial flag Fini and the vehicle velocity determination flag Fv are initialized (=0) respectively in Step S20. The initial flag Fini is set to "1" when the vehicle traveled once. For example, when the vehicle velocity V reaches 10 km/h or higher, it is determined that the vehicle has traveled. The vehicle velocity determination flag Fv is set to "0" when the vehicle velocity V is 2 km/h or below (first vehicle velocity), to "1" at 2 to 13 km/h (second vehicle velocity), and to "2" at 13 to 30 km/h (third vehicle velocity), and to "3" at 30 km/h or higher (fourth vehicle velocity), respectively for every range of vehicle velocity as will be described in conjunction with Fig. 11.

In Step S21, the opening of the throttle valve θTH and number of engine revolution Ne are read. In Step S22, whether or not the initial flag Fini is "0" is determined. If the initial flag Fini is "0", the procedure goes to Step S23, and whether or not the vehicle velocity V is at least 10 km/h is determined. The procedure goes to Step S21 until the vehicle velocity V reaches 10 km/h or higher. When the vehicle velocity V reaches 10 km/h or higher, the procedure goes to Step S24, and the flag Fini is set to "1". When the flag Fini is set to "1", Step S22 is Negative, and the procedure goes to Step S25.

In Step S25, whether or not the opening of the throttle θTH is the value indicating that the throttle is completely closed is determined. When it is determined that the throttle is completely closed, the procedure goes to Step S26, and whether or not the engine shutdown flag (hereinafter referred simply to as "shutdown flag") Fstp is "1" is determined. The shutdown flag Fstp is set to "1" when the vehicle velocity V is determined to be the aforementioned first velocity, the third velocity, or the fourth velocity in the vehicle velocity determination process shown in Fig. 11, and the vehicle velocity was maintained within the respective ranges for a predetermined time period. When the throttle valve is opened, it is set to "0" (Step S29). When the shutdown flag Fstp is not "1", the procedure goes to the vehicle velocity determination process (described later in conjunction with Fig. 11) in Step S27.

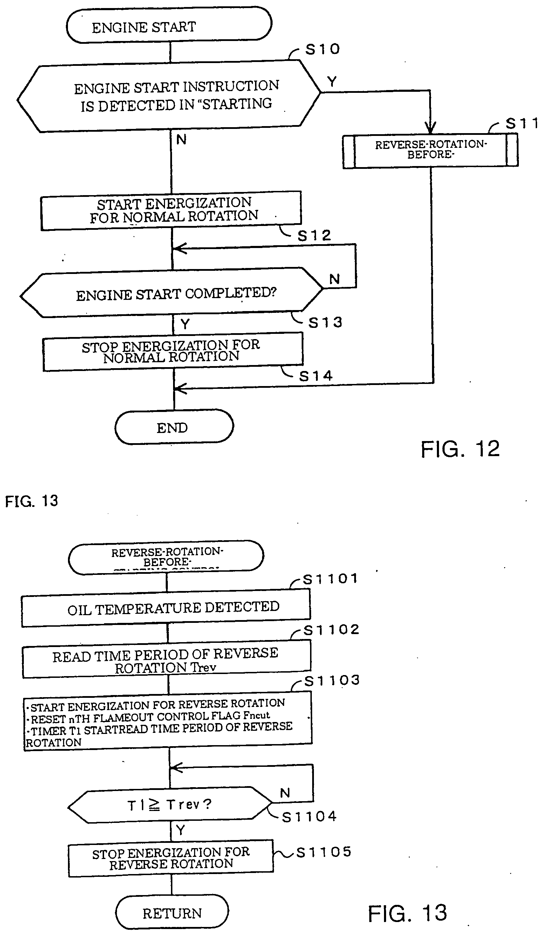

When the throttle valve is opened, the step S25 is Negative, and thus the procedure goes to Step S28. In Step
S28, whether or not the shutdown flag Fstp is "1" or not is determined. When the shutdown flag Fstp is "1", the shutdown flag Fstp is set to "0" in Step S29. In Step S30, the engine is started. Control of starting engine will be described later in conjunction with Fig. 12.

When Step S26 is affirmative, the procedure goes to Step S31, and whether or not the number of engine revolution Ne is below the predetermined number of revolution for protecting the catalyst or the like, for example, 2500 rpm, is determined. When the number of engine revolution Ne is below 2500 rpm, the procedure goes to step S32, and the engine-shutdown-instruction, that is, the suspension-of-ignition instruction, is supplied. In Step S33, "reverse-rotation-at-shutdown control", in which the crankshaft 24 is rotated in the reverse direction in advance to the predetermined position, is performed. When the number of engine revolution Ne is at least 2500 rpm, Step S32 is omitted. In other words, the ignition is not suspended until the number of engine revolution is lowered for protecting the catalyst and the like.

Referring now to Fig. 11, the aforementioned vehicle velocity determination process (Step S27) will further be described. In Step S101, the vehicle velocity V is read. In Step S104, whether or not the vehicle velocity V is 2 km/h or below (first vehicle velocity) is determined. When the vehicle velocity V is 2 km/h or below, that is, when it is determined that the vehicle is practically brought into a halt, the procedure goes to Step S105, and whether or not the vehicle velocity determination flag Fv is "0" is determined. If the vehicle velocity determination flag Fv is not "0", the procedure goes to Step S106, and the vehicle velocity determination flag Fv is set to "0" and simultaneously, the timer T is cleared. When the vehicle velocity flag Fv is "0", the procedure goes to Step S107, and whether or not the value of the timer T is 3 seconds, that is, T2, or more is determined. When the value or the timer T is 3 seconds or more, the procedure goes to Step S108, and the shutdown flag Fstp is set to "1". When the value of the timer T is less than 3 seconds, the procedures goes to Step S109, and the timer T is incremented. In this manner, the vehicle velocity V exceeds 10 km/h once (initial flag Fini="1" in Step S103), and then decreases to the first vehicle velocity, and when 3 seconds have elapsed, the shutdown flag Fstp is set to "1".

When the vehicle velocity V is 2 km/h or more, the step S 104 is Negative, and the procedure goes to Step S110, and whether or not the vehicle velocity V is 13 km/h or below (second vehicle velocity) is determined. When Step S110 is affirmative, that is, when the vehicle velocity V is between 2 km/h and 13 km/h inclusive (second vehicle velocity), the procedure goes to Step S111, and the vehicle speed determination flag Fv is set to "1", and the timer T is cleared. When the vehicle velocity V is not 13 km/h or below, the procedure goes to Step S112, and whether or not the vehicle velocity V is 30 km/h or below is determined.

When it is determined that Step S112 is affirmative, that is, the vehicle velocity V is between 13 km/h and 30 km/h inclusive (third vehicle velocity), the procedure goes to Step S113, and whether or not the vehicle velocity determination flag Fv is "2" is determined. If the vehicle velocity determination flag Fv is not "2", the procedure goes to Step S114, and the vehicle velocity determination flag Fv is set to "2", and the timer T is cleared. When the vehicle velocity flag Fv is "2", the procedure goes to Step S115, and whether or not the value of the timer T exceeds 4.5 seconds, or is T2 or higher, is determined. When the value of the timer T is 4.5 seconds or higher, the procedure goes to Step S116, and the shutdown flag Fstp is set to "1". When the value of the timer T is 4.5 seconds or below, the procedure goes to Step S117, and the timer T is incremented.

When it is determined that the vehicle velocity V is not 30 km/h or below (is fourth vehicle velocity), the procedure goes to Step S118, whether or not the vehicle velocity determination flag Fv is "3" is determined. If the vehicle velocity determination flag Fv is not "3", the procedure goes to Step S119, and the vehicle velocity determination flag Fv is set to "3", and simultaneously, the timer T is cleared. When the vehicle velocity flag Fv is "3", the procedure goes to Step S120, and whether or not the value of the timer T exceeds 3 seconds, that is, T3, or higher, is determined. If the value of the timer T is 3 seconds or higher, the procedure goes to Step S21, and the shutdown flag Fstp is set to "1". When the value of the timer T is 3 seconds or below, the procedure goes to Step S22, and the timer T is incremented.

Fig. 12 is a flowchart for engine start control. In Fig. 12, whether or not the engine start instruction has detected in the starting mode is determined in Step S10. When the starter switch 76 is turned ON, the engine rotation control unit 84 is actuated in the starting mode. When the engine start instruction is issued in this mode, Step S10 is affirmative, and the procedure goes to Step S11. In Step S11, the "reverse-rotation-at-starting control", in which the crankshaft 24 is rotated in the reverse direction to a predetermined position, is performed. The reverse-rotation-at-starting control will be described later in conjunction with Fig. 13.

When Step S10 is negative, that is, when the engine start instruction is detected in the process other than turning-ON operation of the starter switch 76, the procedure goes to Step S12. As described above, since the crankshaft 24 is rotated in the reverse direction to the predetermined position when the engine is brought to a halt, the ACG starter 1 starts to be energized for the normal rotation immediately in Step S12, and thus the engine is cranked in the normal direction. In Step S13, for example, whether or not the engine start has been completed is determined based on the number of engine revolution, for example. When it is determined that the engine start is completed, energization for normal rotation is stopped in Step S14.

Fig. 13 is a flowchart for the "reverse-rotation-at-starting control", and is performed by the reverse-rotation-at-starting control unit 85 of the ECU 75. In Step S 1101, the temperature of engine oil is detected based on the output from the oil temperature sensor 80. In the step S1102, the target time period of reverse rotation Trev corresponding to the detected oil temperature is read from a data table. In the present embodiment, as described in conjunction with Fig. 7, the target time period of reverse rotation Trev is given as a function of the oil temperature. In Step S1103, energization for reverse rotation by the ACG starter 1 is started, and the timer for reverse rotation T1 for counting the time for reverse rotation starts. In Step S1104, the value of the timer T1 for counting the time for reverse rotation and the aforementioned target time period of reverse rotation Trev are compared, and energization for reverse rotation continues until the value of the timer for reverse rotation T1 reaches the target time period of reverse rotation Trev. When the value of the timer for reverse rotation T1 reaches the target time period of reverse rotation Trev, energization for reverse rotation is stopped in Step S1105.

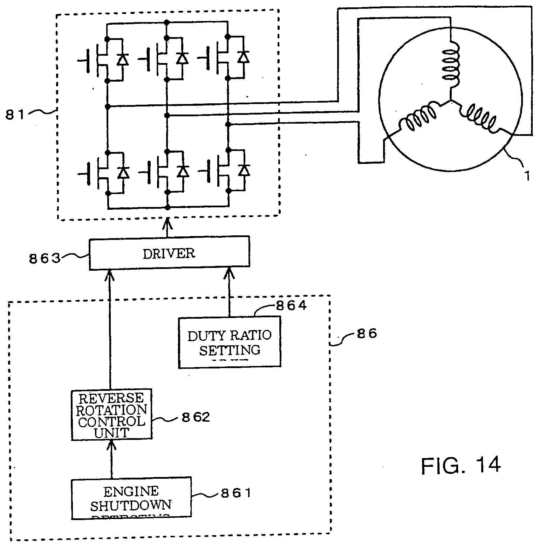

Fig. 14 is a block diagram illustrating a function of the "reverse-rotation-at-shutdown control". In the reverse-rotation-at-shutdown control unit 86, when an engine shutdown detecting unit 861 has detected engine shutdown, the engine shutdown detecting unit 861 input the detected signal to a reverse rotation control unit 862. The reverse rotation control unit 862 generates an instruction to initiate the reverse rotation for a driver 863 in response to the detected signal. A duty ratio setting unit 864 is set in advance for a duty ratio for driving the ACG starter 1 so that the engine is shut down while the driving torque is balanced in the range of high-load torques immediately before the top dead center on the compression stroke. The driver 863 controls the respective MOS-FETs of the motor drive circuit 81 at the supplied duty ratio. In other words, gate voltages to be supplied to the respective MOS-FETs of the motor drive circuit 81 is determined based on the duty ratio, and the output torque of the ACG starter 1 is obtained based on the gate voltage. As described above, since the duty ratio here is determined so that the output torque is balanced with the high-load torque immediately before the top dead center on the compression stroke, the engine is shutdown after rotating in the reverse direction until the position immediately before the top dead center on the compression stroke.

The invention enables economical operation while securing drivability to low vehicle velocities.
In the invention, a suspension-of-ignition directing unit 115 suspends the ignition when the throttle is completely closed and shuts down the engine. The vehicle velocity determination unit 112 determines in which predetermined vehicle velocity ranges the vehicle velocity when the throttle is completely closed resides. The timer 114 is set for various time periods depending on the results of detection as the time limits for suspending the ignition. The suspension-of-ignition directing unit 115 shuts down the engine when the time of the timer 114 is up and the time limit for suspending the ignition has elapsed. The time limit for suspending the ignition is set so as to decrease with increase in vehicle velocity.

## Claims

1. An engine control unit mounted on a vehicle having a catalyst or the like and a power transmission mechanism that can halt transmission of engine output to a driving wheel (RW) when the velocity of the engine (E) is reduced, said engine control unit comprising:
a vehicle velocity detecting unit (112) for detecting a velocity of said vehicle;
an engine revolution speed detecting unit for detecting a number of engine revolutions;
a fully-closed-throttle-detecting unit (111) for detecting that a throttle valve is completely closed; and
an engine shutdown unit (115) for suspending the ignition of the engine (E);
**characterized in that**
said engine shutdown unit (115) is adapted to suspend the ignition after a time limit (T) for shutting down the engine (E) has elapsed in response to the fact that the throttle valve is closed and to the fact that the detected vehicle velocity at the moment when the throttle valve is closed is above or below a low velocity range (between 2 and 13 km/h),
wherein said time limit (T) is determined in accordance with the vehicle velocity at the moment when the throttle valve is closed,
the engine shutdown unit (115) is adapted to suspend the ignition of the engine (E) after the time limit (T) has elapsed only if the number of engine revolutions at the timing when the time limit (T) has elapsed is below a predetermined value for protecting the catalyst or the like, and
said low velocity range is a velocity range in which travel is unstable and is above a further velocity range where the vehicle is substantially in the state of being halted (2 km/h or below).

2. An engine control unit according to claim 1, **characterized in that** said time limit (T) for shutting down the engine (E) is set for each of a plurality of velocity ranges.

3. An engine control unit according to claim 1, **characterized in that** said time limit (T) for shutting down the engine (E) is set corresponding to the timing when the vehicle is brought to a halt and to the velocity range of stable traveling, and **in that** the time limit (T) decreases with increase in vehicle velocity in the velocity range of stable traveling.

4. An engine control unit according to claim 1, **characterized in that** said power transmission mechanism includes a one-way clutch (62).

5. An engine control unit according to claim 1, further comprising a control unit (66) for driving a starter motor (1) provided in said vehicle and rotating a crankshaft (24) to a position in which a load torque of normal rotation is small after said engine (E) is shut down.

6. An engine control unit according to claim 1, **characterized in that** in the low velocity range, in which travel is unstable, the velocity (V) is between 2 and 13 km/h.

## Patentansprüche

1. Motor-Regel-/-Steuereinheit, welche an einem Fahrzeug angebracht ist, aufweisend einen Katalysator oder dergleichen und einen Kraftübertragungsmechanismus, welcher eine Übertragung einer Motorausgabe an ein Antriebsrad (RW) anhalten kann, wenn die Geschwindigkeit des Motors (E) reduziert wird, wobei die Motor-Regel-/-Steuereinheit umfasst:
eine Fahrzeuggeschwindigkeits-Erfassungseinheit (112) zum Erfassen einer Geschwindigkeit des Fahrzeugs;
eine Motordrehzahl-Erfassungseinheit zum Erfassen einer Anzahl von Motorumdrehungen;
eine Voll-Geschlossene-Drossel-Erfassungseinheit (111) zum Erfassen, dass ein Drosselventil vollständig geschlossen ist; und
eine Motorabschalteinheit (115) zum Aussetzen der Zündung des Motors (E);
**dadurch gekennzeichnet, dass**
die Motorabschalteinheit (115) dazu eingerichtet ist, die Zündung auszusetzen, nachdem ein Zeitlimit (T) zum Abschalten des Motors (E) als Reaktion auf die Tatsache, dass das Drosselventil geschlossen ist,
und auf die Tatsache verstrichen ist, dass die erfasste Fahrzeuggeschwindigkeit zu dem Moment, wenn das Drosselventil geschlossen ist, über oder unter einem Niedriggeschwindigkeitsbereich (zwischen 2 und 13 km/h) ist,
wobei das Zeitlimit (T) in Einklang mit der Fahrzeuggeschwindigkeit in dem Moment, wenn das Drosselventil geschlossen ist, bestimmt wird,
die Motorabschalteinheit (115) dazu eingerichtet ist, die Zündung des Motors (E) auszusetzen, nachdem das Zeitlimit (T) verstrichen ist, nur falls die Anzahl von Motorumdrehungen zu dem Zeitpunkt, wenn das Zeitlimit (T) verstrichen ist, unter einem vorbestimmten Wert zum Schützen des Katalysators oder dergleichen ist, und
der Niedriggeschwindigkeitsbereich ein Geschwindigkeitsbereich ist, in welchem eine Fahrt instabil ist, und über einem weiteren Geschwindigkeitsbereich liegt, in dem das Fahrzeug im Wesentlichen in dem Zustand ist, dass es angehalten ist (2 km/h oder darunter).

2. Motor-Regel-/-Steuereinheit nach Anspruch 1, **dadurch gekennzeichnet, dass** das Zeitlimit (T) zum Abschalten des Motors (E) für jeden einer Mehrzahl von Geschwindigkeitsbereichen festgelegt ist.

3. Motor-Regel-/-Steuereinheit nach Anspruch 1, **dadurch gekennzeichnet dass** das Zeitlimit (T) zum Abschalten des Motors (E) entsprechend dem Zeitpunkt festgelegt ist, wenn das Fahrzeug zum Anhalten gebracht wird, und entsprechend dem Geschwindigkeitsbereich eines stabilen Fahrens, und dass das Zeitlimit (T) mit Zunahme an Fahrzeuggeschwindigkeit in dem Geschwindigkeitsbereich eines stabilen Fahrens abnimmt.

4. Motor-Regel-/-Steuereinheit nach Anspruch 1, **dadurch gekennzeichnet, dass** der Kraftübertragungsmechanismus eine Einwegkupplung (62) umfasst.

5. Motor-Regel-/-Steuereinheit Anspruch 1, ferner umfassend eine Regel-/-Steuereinheit (66) zum Antreiben eines Startermotors (1), welcher in dem Fahrzeug bereitgestellt ist, und zum Drehen einer Kurbelwelle (24) zu einer Position, in welcher eine Lastdrehmoment einer normalen Drehung klein ist, nachdem der Motor (E) abgeschaltet wurde.

6. Motor-Regel-/-Steuereinheit nach Anspruch 1, **dadurch gekennzeichnet, dass** in dem Niedriggeschwindigkeitsbereich, in welchem eine Fahrt instabil ist, die Geschwindigkeit (V) zwischen 2 und 13 km/h beträgt.

## Revendications

1. Unité de commande de moteur à combustion interne montée sur un véhicule comportant un catalyseur ou similaire et un mécanisme de transmission de puissance qui peut arrêter la transmission de la sortie du moteur à combustion interne vers une roue motrice (RW) lorsque la vitesse du moteur à combustion interne (E) est réduite, ladite unité de commande de moteur à combustion interne comprenant :
une unité de détection de vitesse de véhicule (112) pour détecter une vitesse dudit véhicule ;
une unité de détection de vitesse de rotation de moteur à combustion interne pour détecter un nombre de tours de moteur à combustion interne ;
une unité de détection de papillon totalement fermé (111) pour détecter qu'un papillon des gaz est complètement fermé ; et
une unité d'arrêt de moteur à combustion interne (115) pour suspendre l'allumage du moteur à combustion interne (E) ;
**caractérisée en ce que**
ladite unité d'arrêt de moteur à combustion interne (115) est conçue pour suspendre l'allumage après qu'une limite de temps (T) pour arrêter le moteur à combustion interne (E) s'est écoulée en réponse au fait que le papillon des gaz est fermé et au fait que la vitesse de véhicule détectée au moment de la fermeture du papillon des gaz est au-dessus ou au-dessous d'une plage de faible vitesse (entre 2 et 13 km/h),
dans laquelle ladite limite de temps (T) est déterminée conformément à la vitesse de véhicule au moment de la fermeture du papillon des gaz,
l'unité d'arrêt de moteur à combustion interne (115) est conçue pour suspendre l'allumage du moteur à combustion interne (E) après que la limite de temps (T) s'est écoulée uniquement si le nombre de tours de moteur à combustion interne à l'instant auquel la limite de temps (T) s'est écoulée est au-dessous d'une valeur prédéterminée pour protéger le catalyseur ou similaire, et
ladite plage de faible vitesse est une plage de vitesse dans laquelle le déplacement est instable et est au-dessus d'une autre plage de vitesse où le véhicule est sensiblement dans l'état d'être arrêté (2 km/h ou moins).

2. Unité de commande de moteur à combustion interne selon la revendication 1, **caractérisée en ce que** ladite limite de temps (T) pour arrêter le moteur à combustion interne (E) est établie pour chacune d'une pluralité de plages de vitesse.

3. Unité de commande de moteur à combustion interne selon la revendication 1, **caractérisée en ce que** ladite limite de temps (T) pour arrêter le moteur à combustion interne (E) est établie en correspondance avec l'instant auquel le véhicule est amené à s'arrêter et avec la plage de vitesse de déplacement stable, et **en ce que** la limite de temps (T) diminue avec l'augmentation de la vitesse de véhicule dans la plage de vitesse de déplacement stable.

4. Unité de commande de moteur à combustion interne selon la revendication 1, **caractérisée en ce que** ledit mécanisme de transmission de puissance comprend un embrayage unidirectionnel (62).

5. Unité de commande de moteur à combustion interne selon la revendication 1, comprenant en outre une unité de commande (66) pour commander un moteur de démarreur (1) prévu dans ledit véhicule et entraîner en rotation un vilebrequin (24) à une position à laquelle un couple de charge de rotation normale est faible après que ledit moteur à combustion interne (E) a été arrêté.

6. Unité de commande de moteur à combustion interne selon la revendication 1, **caractérisée en ce que**, dans la plage de faible vitesse, dans laquelle le déplacement est instable, la vitesse (V) est entre 2 et 13 km/h.
